# EUROPÄISCHE PATENTSCHRIFT

(11) **EP 3 189 008 B1**
(45) Veröffentlichungstag und Bekanntmachung des Hinweises auf die Patenterteilung: **18.12.2019**
(21) Anmeldenummer: 15774497.0
(22) Anmeldetag: 19.08.2015
(51) Int. Cl.: C01B 25/45, H01M 10/052, H01M 10/0562

(54) **FESTKÖRPERELEKTROLYTE FÜR LI-BATTERIEN SOWIE VERFAHREN ZUR HERSTELLUNG DERSELBEN**
SOLID-STATE ELECTROLYTES FOR LI BATTERIES AND PROCESSES FOR PRODUCTION THEREOF
ÉLECTROLYTES SOLIDES POUR BATTERIES AU LI ET PROCÉDÉS DE FABRICATION DESDITS ÉLECTROLYTES

(30) Priorität: 05.09.2014 DE 102014012926
(43) Veröffentlichungstag der Anmeldung: 12.07.2017
(73) Patentinhaber: Forschungszentrum Jülich GmbH (FJZ), 52425 Jülich (DE)
(72) Erfinder: MA, Qianli, 52428 Jülich (DE); TIETZ, Frank, 52156 Monschau (DE); GUILLON, Olivier, 52428 Jülich (DE)
(86) Internationale Anmeldenummer: PCT/DE2015/000414
(87) Internationale Veröffentlichungsnummer: WO 2016/034158

(56) Entgegenhaltungen:
- DE-B3-102012 103 409
- JP-A- 2007 123 081
- US-A1- 2012 308 900
- KOTOBUKI MASASHI ET AL: "Preparation of Li1.5Al0.5Ti1.5(PO4)3solid electrolyte via a sol-gel route using various Al sou", CERAMICS INTERNATIONAL, ELSEVIER, AMSTERDAM, NL, Bd. 39, Nr. 4, 22. Oktober 2012 (2012-10-22), Seiten 4645-4649, XP028983633, ISSN: 0272-8842, DOI: 10.1016/J.CERAMINT.2012.10.206
- Hiromichi Aono ET AL: "Ionic Conductivity of Solid Electrolytes Based on Lithium Titanium Phosphate", Journal of The Electrochemical Society, vol. 137, no. 4, 2 April 1990 (1990-04-02) , pages 1023-1027, XP055212390, ISSN: 0013-4651, DOI: 10.1149/1.2086597

## Beschreibung

Die Erfindung betrifft ein Verfahren zur Herstellung von reinen Lithium-Titanphosphaten (engl.: Lithium Titanium Phosphates (LiTi₂(PO₄)₃, abgekürzt: LTP) sowie von substituierten Lithium-Titanphosphaten für den Einsatz als Festelektrolyte für Lithium-Batterien.

### Stand der Technik

Große leistungsfähige und sichere Lithium-basierte Energiespeicher sind ein essentieller Baustein für die Weiterentwicklung von alternativen Antriebskonzepten, z. B. für Hybridfahrzeuge, oder regenerative Energietechniken, z. B. zur Speicherung des erzeugten Stroms aus Windkraft. Lithium-Ionen Batterien (engl.: Lithium Ion Battery, LIB) sind heute die am weitesten verbreitete Stromquellen für mobile Anwendungen. Der zwischen den Elektroden liegende Elektrolyt umfasst gelöstes Lithiumsalz. Je nachdem, ob der Elektrolyt flüssig oder fest ist, spricht man von Lithium-Ionen-Akkumulatoren oder Lithium-Polymer-Akkumulatoren oder Lithium-Festkörper-Akkumulatoren.

Die Entwicklung von Festkörperelektrolyten kann dabei der Schlüssel für die nächste Generation von Lithium-Batterien darstellen. Bei Verwendung von metallischem Lithium als Anode weisen sie eine deutlich höhere Energiedichte auf und sind vorteilhaft schwerer entflammbar, da auf organische Komponenten in den Batteriekomponenten verzichtet werden kann. Auf Grund ihrer in der Regel gelartigen oder keramischen Elektrolyte weisen sie zudem bessere Auslaufeigenschaften auf und sind auf Grund ihres weiten Stabilitätsbereiches auch bis zu höheren Temperaturen anwendbar.

Unter den potentiellen Kandidaten für einen Lithium-ionenleitenden Festelektrolyten wurden die substituierten Lithium-Titanphosphate bereits im großen Umfang untersucht und auf Grund ihrer hohen lonenleitfähigkeit und ihrer mechanischen Stabilität als sehr erfolgversprechend eingestuft.

Das Potential von Lithium-Titanphosphaten als Elektrolyt ist bereits seit längerem bekannt. Lithium-Titanphosphat kristallisiert in der so genannten NASICON-Struktur. NASICON ist dabei ein Akronym für "Natrium Super lonic CONductor", und bezeichnet eine Gruppe von Feststoffen mit der chemischen Formel Na₁₊ₓZr₂SiₓP₃₋ₓO₁₂ mit 0 < x < 3.

Im weiteren Sinne wird der Begriff NASICON auch für ähnliche Verbindungen verwendet, bei denen Na, Zr und/oder Si durch isovalente Elemente ersetzt werden kann und in der gleichen Struktur kristallisieren.

NASICON-Verbindungen zeichnen sich in der Regel durch einen hohe ionische Leitfähigkeit in der Größenordnung 10⁻⁵ - 10⁻³ S/cm bei Raumtemperatur aus. Bei erhöhten Temperaturen von 100 - 300 °C steigt die ionische Leitfähigkeit auf 10⁻² - 10⁻¹ S/cm und ist damit vergleichbar mit flüssigen Elektrolyten. Diese hohe Leitfähigkeit wird durch die Beweglichkeit der Na- oder Li-Ionen innerhalb des NASICON Kristallgitters bewirkt.

Die Kristallstruktur von NASICON-Verbindungen besteht aus einem kovalenten Netzwerk aus ZrO₆-Oktaedern und PO₄/SiO₄-Tetraedern, die über gemeinsame Ecken verbunden sind. Die Na- oder Li-Ionen befinden sich dabei auf zwei unterschiedlichen Zwischengitterplätzen, zwischen denen sie sich bewegen. Dabei müssen sie durch sogenannte Engpässe. Die Größe der Engpässe beeinflusst aufgrund der sterischen Wechselwirkung der Na-Ionen mit der lokalen Umgebung des [Zr₂(P,Si)₃O₁₂]⁻-Gitters die ionische Leitfähigkeit und hängt von der jeweils konkreten Zusammensetzung der NASICON-Verbindung sowie vom Sauerstoffgehalt der umgebenden Atmosphäre ab. Die ionische Leitfähigkeit kann gesteigert werden, indem ein Selten-Erd-Element, wie beispielsweise Yttrium, zur NASICON-Verbindung hinzugefügt wird.

In der Kristallstruktur von Lithium-Titanphosphaten kann die teilweise Substitution der Ti⁴⁺ Kationen durch ein trivalentes Kation M³⁺ wie beispielsweise Al³⁺, Y³⁺ oder Sc³⁺ einen Defekt in der positiven Ladung verursachen, die durch zusätzliche Li⁺ Ionen ausgeglichen werden kann, und in Summe zu einer höheren ionischen Leitfähigkeit führt, da dadurch die Zahl der Ladungsträger erhöht wird.

Die bislang in der Literatur offenbarten ionischen Leitfähigkeiten für substituierte LTP-Materialien liegen bei Raumtemperatur typischerweise im Bereich von 1 × 10⁻⁴ bis 1 × 10⁻³ S/cm, und sind damit - neben den Li-ionenleitenden Granaten vom Typ Li₇La₂Zr₃O₁₂ - die höchsten Werte, die in der Literatur für oxidische Festelektrolyte bekannt sind. Es wurde vermutet, dass eine weitere Substitution von Phosphatgruppen durch Silikatgruppen gemäß der allgemeinen Formel Li_{1+x+y}MₓTi₂₋ₓ(PO₄)_{3-y}(SiO₄)_{y} die ionische Leitfähigkeit und die mechanische Stabilität nochmals verbessern würde (US 6,475,677 B1).

Derzeit sind bereits einige unterschiedliche Verfahren zur Herstellung von LTP-basierten Pulvern bekannt. Dazu zählen die Festphasenreaktion, die Sol-Gel Methode sowie die Aufschmelztechnik mit anschließender Abschreckung (melt-quenching).

Eine der größten Herausforderungen bei der Herstellung LTP-basierter Materialien ist jedoch, die Phasenreinheit der hergestellten Pulver sicherzustellen. Bei der herkömmlichen Verfahrensweise über eine Festphasenreaktion weisen die hergestellten Pulver in der Regel Unreinheiten im Inneren auf. Diese führen nachteilig zu einer Senkung der ionischen Leitfähigkeit dieser Pulver.

Eine weitere Schwierigkeit bei der Herstellung von LTP-basierten Materialien ist die für manche Anwendungen notwendige Verdichtung, weil die Temperatur für die Verdichtung in der Regel sehr nahe an der Zersetzungstemperatur dieser Materialien liegt. Bislang sind nur teure und aufwändige Methoden in der Lage, diese angesprochenen Probleme zu lösen.

In US 6,475,677 B1 wird beispielsweise die Methode des melt-quenchings beschrieben. Dabei wird das Ausgangsmaterial (stöchiometrische Mengen an NH₄H₂PO₄, Al(PO₃)₃, LiCO₃, SiO₂ und TiO₂) zur Herstellung von Li_{1+x+y}MₓTi₂₋ₓ(PO₄)_{3-y}(SiO₄)_{y} mit 0 ≤ x ≤ 0,4 und 0 ≤ y ≤ 0,6 zunächst bei ca. 1500 °C aufgeschmolzen und anschließend im Wasserbad abgekühlt, um dann bei 950 °C erneut zu kristallisieren. Die so erhaltene Glaskeramik wurde in einer Kugelmühle gemahlen, so dass mittlere Partikelgrößen von 7 µm erhalten wurden.

Von Wen et al., "Preparation, Microstructure and Electrical Properties of Li1,4Al0,4Ti1,6(PO4)3 Nanoceramics," J. Electroceram, Volume 22, 2009, Seiten 342 - 345, wird berichtet, dass eine Verdichtung von hergestelltem Li_{1,4}Al_{0,4}Ti_{1,6}(PO₄)₃-Pulver über eine Sol-Gel Methode auf nahezu 100 % der theoretischen Dichte durch eine Laserversinterung mit Funken erreicht wurde. Es wurde eine Li-Ionenleitfähigkeit bei Raumtemperatur von 1,39 x 10⁻³ S/cm erreicht. Die dafür eingesetzte Laservorrichtung erscheint für eine industrielle Herstellung jedoch ungeeignet.

Von M. Holzapfel et al. (US 2012/0295168 A1) wurde ein Sprühtrocknungsverfahren vorgestellt, mit dem Li₁₊ₓAlₓTi₂₋ₓ(PO₄)₃ mit x ≤ 0,4 als Pulver erstmalig "phasenrein" hergestellt wurde. Dabei wurden entsprechende Mengen an Lithium-, Aluminium- und Titansalzen oder entsprechende die Oxide zunächst in Phosphorsäure gelöst. Die primären Pulver wurden anschließend durch Sprühtrocknung der Lösung erhalten. Das "phasenreine" Li₁₊ₓAlₓTi₂₋ₓ(PO₄)₃ Pulver konnte dann durch Sinterung der primären Pulver bei ca. 900 °C erzeugt werden. Unter "phasenrein" wird verstanden, dass Fremdphasen, wie beispielsweise AlPO₄ oder TiP₂O₇ zu einem Anteil von weniger als 1 % vorliegen. Untersuchungen zur Dichte der Li₁₊ₓAlₓTi₂₋ₓ(PO₄)₃ Grünkörper werden in der Druckschrift nicht offenbart. Zudem stellt sich die Frage nach der Gefährlichkeit des Sprühtrocknens von Phosphorsäure-basierten Lösungen.

Ein weiteres Verfahren zur Herstellung von Li_{1+x+y}AlₓTi₂₋ₓP_{3-y}Si_{y}O₁₂ Pulver mit x ≤ 0,4 wird in DE 10 2012 103 409 B3 beschrieben. Dort wird eine Sol-Gel Methode zur Herstellung offenbart. Wässrige Lithium- und Aluminiumsalzlösungen werden mit einem Titanalkoxid und gegebenenfalls einem Orthosilikat in entsprechenden Mengenverhältnissen versetzt, wodurch ein Sol entsteht. Die wässrigen Lösungen weisen einen pH-Wert im neutralen bis basischen Bereich von pH 7 bis pH 12 auf. Dem Sol wird anschließend eine wässrige Ammoniumdihydrogenphosphat-Lösung zugeführt, wodurch ein Gel entsteht. Die Gelbildung erfolgt durch eine Kondensations- und Polymerisationsreaktion, die durch das Zusammenbringen von Alkoxid- mit Phosphatlösung ausgelöst wird, ohne dass weitere Hilfssubstanzen wie Glykol oder Zitronensäure erforderlich wären.

Das endgültige reine Pulver wird im Anschluss durch Trocknung und Kalzination des Gels erhalten. Die dabei erzielten durchschnittlichen Partikelgrößen liegen im Bereich von 0,5 µm bis 5 µm. Alle Prozessschritte, bis auf das Kalzinieren finden bei Raumtemperatur statt. Die Wärmebehandlung soll störende, verdampfbaren Anteile pyrolytisch zersetzen.

Allerdings wird in DE 10 2012 103 409 B3 offenbart, dass über den so beschriebenen Syntheseweg Verunreinigungen des Li_{1+x+y}AlₓTi₂₋ₓP_{3-y}Si_{y}O₁₂ Pulvers nicht ganz verhindert werden können. Es wird berichtet, dass jedoch trotz der auftretenden Fremdphasen eine Li-Ionenleitfähigkeit bei Raumtemperatur in der Größenordnung von 1 x 10⁻³ S/cm erreicht würde. Ferner würde durch das Sintern bei einem Druck zwischen 5 MPa und 50 MPa ein dichter Sinterkörper erhalten.

Weiterhin wird von Kotobuki et al. in "Preparation of Li1,5Al0,5Ti1,5 (PO4)3 solid electrolyte via a sol-gel route using various AI sources", ceramics international, Elsevier Amsterdam, NL, Bd. 39, Nr. 4, 22. Oktober 2012 (2012-10-22), Seiten 4645 - 4649, bereits von einem Festkörperelektrolyt mit der Formel Li_{1,5}Al_{0,5}Ti_{1,5}(PO₄)₃ berichtet.

### Aufgabe und Lösung

Die Aufgabe der Erfindung ist es, ein phasenreines, auf Lithium-Titanphosphaten (LTP) basiertes Material in NASICON-Struktur zur Verfügung zu stellen, welches eine hohe Lilonenleitfähigkeit von mehr als 10⁻⁴ S/cm bei Raumtemperatur aufweist und als Festkörperelektrolyt für Li-Batterien eingesetzt werden kann. Bei diesem Material kann es sich sowohl um reines Lithium-Titanphosphat als auch um ein substituiertes Lithium-Titanphosphat, insbesondere um ein solches mit der allgemeinen Formel Li_{1+x+y}MₓTi₂₋ₓ(PO₄)_{3-y}(SiO₄)_{y}, mit M = AI, Ga, In, Sc, V, Cr, Mn, Co, Fe, Y, La - Lu, und 0 ≤ x ≤ 0,5 sowie 0 ≤ y ≤ 0,5 handeln.

Gleichzeitig ist es die Aufgabe der Erfindung, eine solches, auf Lithium-Titanphosphaten basiertes Material zur Verfügung zu stellen, welches zudem in einem einfachen und wenig aufwändigen Verdichtungsschritt auf mehr als 95 % der theoretischen Dichte verdichtet werden kann.

Darüber hinaus ist es eine weitere Aufgabe der Erfindung, ein kostengünstiges und effektives Verfahren zur Herstellung eines reinen oder substituierten Lithium-Titanphosphats bereit zu stellen.

Die Aufgaben der Erfindung werden gelöst durch ein Herstellungsverfahren mit den Merkmalen des Hauptanspruchs, sowie durch die Erzeugnisse dieses Herstellungsverfahrens gemäß Nebenanspruch. Vorteilhafte Ausgestaltungen des Verfahrens und der damit hergestellten Erzeugnisse finden sich in den darauf rückbezogenen Ansprüchen.

### Gegenstand der Erfindung

Gegenstand der Erfindung ist ein Herstellungsverfahren zur Herstellung eines Materials basierend auf Lithium-Titanphosphaten, welches großtechnisch einfach und kostengünstig durchzuführen ist, eine hohe Phasenreinheit aufweist und leicht zu sintern bzw. auf mehr als 95 % der theoretischen Dichte zu verdichten ist. Das auf diese Weise hergestellte, auf einem Lithium-Titanphosphat-basierte Material ist auf Grund seiner hohen Lithiumionenleitfähigkeit insbesondere für den Einsatz als Festelektrolyt in einer Lithium-Batterie oder einer Li/Luft-Batterie bzw. einem Lithium-Ionen-Akkumulator geeignet.

Das erfindungsgemäß hergestellte Material hat dabei die folgende Zusammensetzung: Li_{1+x+y}MₓTi₂₋ₓ(PO₄)_{3-y}(SiO₄)_{y}, mit M = Al, Ga, In, Sc, V, Cr, Mn, Co, Fe, Y, La - Lu, und 0 ≤ x ≤ 0,5 sowie 0 ≤ y ≤ 0,5 handeln.

Die vorliegende Erfindung offenbart eine einfache, kostengünstige und leicht zu kontrollierende Methode (Synthese), um phasenreines und leicht sinterbares Material herzustellen, welches auf Lithium-Titanphosphaten basiert. Neben reinem, nicht substituiertem Lithium-Titanphosphat (LiTi₂(PO₄)₃) sind auch solche Verbindungen mit umfasst, bei dem das Titan zumindest teilweise durch Übergangsmetalle, wie Al, Ga, In, Sc, V, Cr, Mn, Co, Fe, Y, La - Lu ersetzt ist. Unter der Bezeichnung La - Lu werden dabei die Elemente mit der Ordnungszahl 57 bis 71 verstanden. Ferner sind auch solche Verbindungen umfasst, bei denen das Phosphat teilweise durch Silikat ersetzt ist. Die vorgenannten Substitutionen können entweder alternativ oder auch kumulativ auftreten.

Das erfindungsgemäße Material weist die vorteilhafte Eigenschaft auf, auf einfache Weise und ohne eine druckunterstützte Sinterung zu einem hochdichten Bauteil verdichtet werden zu können.

Das erfindungsgemäße Verfahren basiert auf einem an sich bekannten Sol-Gel Verfahren, bei dem zunächst aus Lithium-, Titan- und ggfs. weitere Ionen in einer wässrigen Lösung ein Sol bereit gestellt wird, welches sich bei Zugabe von Phosphationen zu einem Gel umwandelt.

Ein Sol ist ein Spezialfall eines Kolloids. Unter einem Kolloid werden Partikel oder Tröpfchen verstanden, die in einem festen, flüssigen oder gasförmigen Dispersionsmedium fein verteilt vorliegen. Die Größe der einzelnen Partikel bzw. Tröpfchen liegt dabei typischerweise im Nanometer- oder Mikrometer-Bereich. Unter einem Sol wird ein einphasiges System verstanden, bei dem eine erste Komponente ein schwammartiges, dreidimensionales Netzwerk ausbildet, dessen Poren mit einer weiteren Komponente, insbesondere mit einem Lösungsmittel, gefüllt sind. Ein Sol kann sich durch Kondensation in ein Gel umwandeln und durch Hydrolyse seinerseits wieder in ein Sol überführt werden.

Im Rahmen dieser Erfindung wird unter einem Sol eine polymere Lösung verstanden die sich im Rahmen einer kontinuierlichen Phasenumwandlung zu einem viskoelastischen Festkörper (Gel) umwandeln kann. Bei einem Gel liegt ein dreidimensionales Netzwerk aus einer ersten Komponente vor, welche bei der Synthese in einem Lösemittel unter Aufnahme desselben ein dreidimensionales Netzwerk ausbildet oder bei dem ein bereits vorhandenes Netzwerk durch Aufnahme eines Lösemittels aufquillt. Ein Gel ist dadurch charakterisiert, dass das Netzwerk seine äußere Gestalt beibehält und elastische Eigenschaften besitzt.

Das erfindungsgemäß hergestellte Pulver weist eine Zusammensetzung mit der folgenden allgemeinen Formel Li_{1+x+y}MₓTi₂₋ₓ(PO₄)_{3-y}(SiO₄)_{y} mit M = Al, Ga, In, Sc, V, Cr, Mn, Co, Fe, Y, La-Lu, 0 ≤ x ≤ 0,5 sowie 0 ≤ y ≤ 0,5 auf.

Eine auf Lithium-Titanphosphat (LTP) basierte Verbindung, bei der das Lithium teilweise substituiert durch M vorliegt, wird im Folgenden auch mit LMTP abgekürzt.

Eine auf Lithium-Titanphosphat (LTP) basierte Verbindung, bei der das Phosphat teilweise substituiert durch Silikat vorliegt, wird im Folgenden auch mit LTPS abgekürzt.

Eine auf LTP basierte Verbindung, bei der sowohl das Lithium teilweise substituiert durch M als auch das Phosphat teilweise substituiert durch Silikat vorliegt, wird im Folgenden auch mit LMTPS abgekürzt.

Erfindungsgemäß können bei dem Verfahren zur Herstellung von LTP, LMTP, LTPS bzw. LMTPS Pulver kostengünstige Ausgangsmaterialien einsetzt werden, und das Verfahren selbst mit einfachen Laborgeräten durchgeführt werden. Das Verfahren kann auch leicht vom Labormaßstab mit einer Ausbeute von beispielsweise 10 g bis 1000 g für industrielle Anwendungen mit einer Ausbeute von mehreren Tonnen hochskaliert werden.

Als Ausgangsmaterial wird eine saure wässrige Lösung vorgelegt. Als erster Verfahrensschritt wird erfindungsgemäß eine stabile TiO²⁺-Nitratlösung bereitgestellt.

Da TiO²⁺ bekanntermaßen bevorzugt lange (TiO)ₙ²ⁿ⁺-Ketten ausbildet und komplexe Titanhydroxid-Oxide selbst unter extrem sauren Bedingungen ausfallen, ist die Herstellung einer relativ stabilen Lösung nicht einfach.

Die vorliegende Erfindung löst dieses Problem dadurch, dass in einem ersten wesentlichen Verfahrensschritt eine stabile TiO²⁺-Lösung zur Verfügung gestellt wird. Dazu wird zunächst Titan(IV)isopropoxid zu einer ausreichenden Menge destilliertem Wasser gegeben Es bilden sich umgehend Titanhydroxid-Oxidausfällungen (TiO₂*nH₂O) in Isopropanol.

Die frischen Ausfällungen können leicht mit Salpetersäure wieder aufgelöst werden. Als frisch werden solche Ausfällungen bezeichnet, die der Luft nur für kurze Zeit, das bedeutet nur für wenige Stunden, ausgesetzt sind.

Im Rahmen der Erfindung hat sich herausgestellt, dass bei Raumtemperatur das wieder in Lösung bringen der Titanhydroxid-Oxidausfällungen nur für eine kurze Zeit gelingt. Es hat sich gezeigt, dass sich bald darauf wieder erneut Titanhydroxid-Oxidausfällungen bilden, die dann nicht mehr durch die vorliegende Salpetersäure aufgelöst werden können. Das bedeutet, dass sowohl die bereits einmal wieder in Lösung gebrachten und erneut ausgefällten Niederschläge nicht mehr aufgelöst werden können, und dass ein erstmaliger (frischer) Niederschlag nach einer bestimmten Zeit, wie im Abschnitt zuvor erläutert, regelmäßig nicht mehr aufgelöst werden kann.

Der Prozess der Ausfällung verläuft dabei derart kontinuierlich, so dass es auch für einen Fachmann schwer ist, einen exakten Zeitpunkt zu bestimmen, wann aus der Lösung ein Sol entsteht

Bei der vorliegenden Erfindung wird die Auflösung der frischen Titanhydroxid-Oxidausfällungen in Salpetersäure erfindungsgemäß bei niedrigen Temperaturen zwischen 0 und 10 °C, vorteilhaft zwischen 0 und 8 °C durchgeführt. Der pH-Wert liegt dabei im Bereich von 0 bis 1. In diesem Fall kann der Transformationsprozess der Titanhydroxid-Oxidausfällung auf eine Zeitspanne von regelmäßig 10 bis 20 Tagen verlängert werden.

Während dieser Zeit, d. h. solange die TiO²⁺-Nitratlösung vorliegt, wird eine Polycarbonsäure, beispielsweise Zitronensäure, hinzugegeben. In diesem Zustand bildet sich dann ein stabiles wässriges System aus, welches auch bei Raumtemperatur ohne weitere Veränderungen für längere Zeit, d. h. auch länger als 20 Tage, aufbewahrt werden kann. Es hat sich unter anderem herausgestellt, dass eine Zugabe von doppelt so viel Mol Zitronensäure wie Mol TiO²⁺ vollkommen ausreicht, um den vorgenannten Effekt zu erzielen. Neben Zitronensäure sind beispielsweise auch weitere Polycarbonsäuren mit wenigstens zwei Carbonsäuren, wie Oxalsäure, Fumarsäure oder auch Weinsäure geeignet.

Auf Basis dieser erfindungsgemäß stabilen TiO²⁺-Nitratlösung können dann, je nachdem ob reines oder substituiertes Lithium-Titanphosphat erhalten werden soll, die Zugaben entsprechender Mengen an Salzen für eine gewünschte Stöchiometrie an Lithium und M erfolgen.

Das Lithium und die Übergangsmetalle M können beispielsweise als Nitrate, Azetate oder Karbonate dem wässrigen System zugefügt werden. Ferner können auch geeignete Oxide von Li oder M vorab in Salpetersäure gelöst werden. Im Grundsatz kann jedes lösliche Salz oder jede Säure der gewünschten Elemente (Li, Al, Ga, In, Sc, V, Cr, Mn, Co, Fe, Y, La-Lu) eingesetzt werden, solange sie durch einen späteren Kalzinierungsprozess zersetzt werden können und keine Verunreinigungen im wässrigen System hinterlassen.

Für die Ausbildung der Phosphatgruppen werden in der Regel Phosphorsäure und/oder Ammoniumdihydrogenphosphat zugefügt.

Es hat sich herausgestellt, dass bei der Zugabe der Phosphorsäure und/oder des Ammoniumdihydrogenphosphats die vorherige Zugabe der Zitronensäure auch dann sinnvoll ist, wenn die die frisch gebildete TiO²⁺-Nitratlösung sofort weiter verarbeitet wird. Ohne die Zugabe der Zitronensäure würde es andernfalls in der TiO²⁺-Nitratlösung zu spontanen Ausfällungen kommen. Zudem würden sich in dem Sol größere Partikel ausbilden, die nachfolgend nicht mehr die gewünschten Eigenschaften aufweisen.

Für eine teilweise Substitution der Phosphatgruppen kommt beispielsweise die Zugabe von löslichen Silikaten oder ortho-Silikatsäuren oder Alkylester der ortho-Silikatsäure in entsprechender Menge in Betracht. Diese Zugabe erfolgt jedoch immer vor der Zugabe der Phosphorsäure und/oder Ammoniumdihydrogenphosphat.

Ein besonderer Vorteil dieses erfindungsgemäßen Verfahrens ist der vielfältige Einsatz an geeigneten Ausgangsmaterialien. Beispielsweise werden in US 6,475,677 B1 explizit NH₄H₂PO₄, Al(PO₃)₃, LiCO₃, SiO₂ und TiO₂ als Ausgangsmaterialien offenbart. In US 20120295168 A1 muss zwingend TiO₂ in der Anatas-Modifikation, LiOH, Al(OH)3 sowie ortho-Phosphorsäure verwendet werden.

Bei der vorliegenden Erfindung können - sobald die TiO2⁺-Lösung hergestellt ist - vorteilhaft alle löslichen Salze oder Säuren der Elemente Li, Al, Ga, In, Sc, V, Cr, Mn, Co, Fe, Y und La - Lu in Form von beispielsweise Nitraten, Azetaten, Karbonaten oder auch Hydroxiden oder ähnlichen Verwendung finden. Zudem können ortho-Kieselsäuren, Kieselsäuretetraethylester (TEOS) oder andere organische Siliziumquelle sowie NH₄H₂PO₄, (NH₄)₂HPO₄ oder auch H₃PO₄ eingesetzt werden.

Die eingesetzten Verbindungen sollten löslich sein und regelmäßig nur die entsprechende Zusammensetzung, d. h. möglichst keine Verunreinigungen aufweisen.

Es ist zu beachten, dass die Zugabe der Phosphorsäure bzw. des Ammoniumdihydrogenphosphats als letzte Zugabe zum wässrigen System umfassend das TiO²⁺, die Salze (ionen) des Lithiums und von M sowie optional das Silikat bzw. die ortho-Silikatsäure und/oder die oder Alkylester der ortho-Silikatsäure.

Die Zugabe der Phosphorsäure bzw. des Ammoniumdihydrogenphosphats findet bei niedrigen Temperaturen zwischen 0 und 10 °C, vorteilhaft zwischen 0 und 5 °C statt. Selbst bei 0° C würde auf Grund der gelösten Salze keine Eisbildung eintreten. Da das sich möglicherweise bildende Titanphosphat prinzipiell eine sehr starke Tendenz zur Ausfällung hat, kann durch die Einhaltung der vorgenannten niedrigen Temperaturen diese Tendenz zur Ausfällung vorteilhaft vermieden, zumindest aber stark eingeschränkt werden.

Sobald die Phosphorsäure oder das Ammoniumdihydrogenphosphat dem wässrigen System zugegeben und mit diesem vermischt wird, bildet sich umgehend ein homogenes Sol aus. Dieser Prozess läuft regelmäßig innerhalb weniger Sekunden ab, beispielsweise innerhalb von 2 Sekunden.

Die Vermischung der reinen oder substituierten LTP-Komponenten erfolgt in der Lösung auf der Nanometerskala, was einen positiven Effekt auf die Phasenreinheit des herzustellenden Pulvers hat. Darüber hinaus verhindert die niedrige Temperatur regelmäßig das Wachstum von Partikel innerhalb des Sols. Kleine Partikelgrößen im Sol führen demgegenüber auch zu kleinen Partikelgrößen während der Pulverherstellung, was wiederum vorteilhaft für einen sich anschließenden Sinterprozess ist.

Das auf die vorgenannte Weise gebildete Sol ist in der Regel nicht langzeitstabil. Nach einer gewissen Zeit wandelt sich das Sol kontinuierlich in ein homogenes Gel um. Die Umwandlung erfolgt dabei je nach Temperatur im Bereich von Minuten, beispielsweise in einem Zeitraum von 30 Minuten bis zu einer Stunde. Bei Raumtemperatur erfolgt die Umwandlung zum Gel eher schneller im Minutenbereich, bei tiefen Temperaturen um 0 °C entsprechend langsamer, d. h. bis zu einer Stunde.
In DE 102012103409 B3 ist ebenfalls ein sich spontan bildendes Gel beschrieben, welches erhalten wird, sobald eine Ammoniumdihydrogenphosphatlösung (NH₄H₂PO₄) zu der wässrigen Mischung aus Aluminiumnitrat (Al(NO₃)₃), Lithiumazetat (LiCH₃OO) und Titan(IV)-isopropoxid (Ti(OCH₂)CH₃)₄ gegeben wird. Allerdings wird vermutet, dass es sich bei der wässrigen Mischung aus Aluminiumnitrat (Al(NO₃)₃), Lithiumazetat (LiCH₃OO) und Titan(IV)iospropoxid (Ti(OCH₂(CH₃)₂)₄ nicht um ein Sol im Sinne dieser Erfindung handelt, da dieser Verfahrensschritt der sich anschließenden Gelbildung bislang nicht reproduziert werden konnte.

Die in DE 102012103409 B3 beschriebene nicht vorhandene Phasenreinheit lässt darauf schließen, dass die wässrige Mischung der Ausgangsmaterialien weder als reine Lösung noch als Sol vorliegt, sondern vermutlich bereits Ausfällungen größerer Partikel enthält. Dies würde auch erklären, warum zur Verdichtung des erhaltenen Pulvers ein Druck-unterstützter Sinterprozess benötigt wird, der üblicherweise nur bei Vorliegen größerer Partikel benötigt wird.

Während erfindungsgemäß das reine oder substituierte Lithium-Titanphosphat-Pulver vorteilhaft bei Raumtemperatur gepresst (z. B. mit 100 MPa) und anschließend drucklos gesintert wird, wird in DE 102012103409 B3 das Pulver bei Temperaturen um 900 °C gepresst und anschließend gesintert. Für die Verdichtung bei hohen Temperaturen sind dazu jedoch nachteilig aufwändige Vorrichtungen bereit zu stellen.

Erfindungsgemäß wird das erhaltene homogene Gel im Anschluss für einige Stunden getrocknet, bevor es vorgesintert wird. Beispielsweise kann das homogene Gel für einige Stunden zunächst bei niedrigeren Temperaturen unterhalb von 100 °C vorgetrocknet und im Anschluss für weitere Stunden bei Temperaturen oberhalb von 100 °C komplett getrocknet werden.

Daran schließt sich ein Vorsinterungsschritt bei Temperaturen um 600 °C an, bei dem das gewünschte reine oder substituierte Lithium-Titanphosphat-Pulver erhalten wird.

Bei Temperaturen von ca. 600 °C kann davon ausgegangen werden, dass der Hauptanteil an organischen Bestandteilen aus dem zuvor getrockneten Gel verdampft ist. Unter dem getrockneten Gel wird im Rahmen der Erfindung das Pulver mit Anteilen an organischen Bestandteilen und amorphen, anorganischen Bestandteilen verstanden.
Allerdings ist das so erhaltene Pulver regelmäßig noch nicht phasenrein. Zudem können teilweise größere Agglomerationen beobachtet werden. Aus diesem Grund wird vor dem eigentlichen Sinterprozess zur Verdichtung des Materials ein Mahlprozess beispielsweise mit einer Kugelmühle und keramischen Kugeln vorgeschlagen, um die vorhandenen Agglomerationen aufzubrechen, anhaftende Reste an organischen Bestandteilen zu verdampfen und das vorgesinterte Pulver auch garantiert sinterfähig zu machen.

Das vorgesinterte Pulver zeigt eine weißlich graue Färbung und weist nach dem Mahlschritt eine Partikelgröße zwischen 50 und 100 nm auf. Die Partikelgröße bezieht sich dabei auf nicht agglomeriertes Pulver.

Als nächstes wird im Rahmen der Erfindung ein einfacher Verdichtungsschritt für das vorgesinterte und ggfs. gemahlene Pulver vorgeschlagen. Dazu wird das Pulver vorteilhaft bei Raumtemperatur zunächst verpresst und anschließend bei hohen Temperaturen für einige Stunden gesintert. Zum Pressen des Pulvers ist insbesondere eine uniaxiale Presse geeignet. Als Anpressdruck haben sich Drücke zwischen 50 und 200 MPa bewährt, insbesondere Drücke um 100 MPa.

Im Anschluss daran kann der folgende Sinterschritt bei Temperaturen zwischen 820 und 1050 °C, vorteilhaft zwischen 870 und 920 °C erfolgen. Die Sinterung sollte einige Stunden, vorteilhaft über einen Zeitraum von wenigstens 5 Stunden erfolgen. Die vorgenannten Zeiten beziehen sich dabei auf die Haltezeit bei der höchsten eingestellten Temperatur und berücksichtigen insofern nicht die benötigten Aufheiz- und Abkühlphasen. Als Aufheiz- und Abkühlrate können Werte von typischerweise 3 bis 15 K/min angegeben werden. Während der Sinterung ist regelmäßig keine Druckbeaufschlagung vorgesehen.

Eine Überprüfung des gesinterten Pulvers oder auch der verdichteten Pellets mittels Röntgen-Diffraktometrie (XRD) hat ergeben, dass in den Proben des erfindungsgemäß hergestellten reinen oder substituierten Lithium-Titanphosphat-Materials keine Fremdphase detektiert werden konnte. Das Pulverdiffraktogramm zeigte keinerlei Reflexe für Fremdphasen, wie beispielsweise AlPO₄ oder TiP₂O₇, wie sie in DE 10 2012 103 409 B3 erwähnt werden.

Die Dichte der erfindungsgemäß hergestellten Proben erreichte mehr als 99 % der theoretischen Dichte. Ein solches Verfahren, mit dem LTP, LMTP, LTPS oder LMTPS-Materialien mit einer solch hohen Dichte über einen einfachen Verdichtungs- und Sinterschritt hergestellt werden können, ist bislang nicht bekannt.

Diese hohen Dichten der erfindungsgemäß hergestellten Materialien bewirken eine sehr gute Lithium-Ionentleitfähigkeit in dem Bereich von 1 × 10⁻⁴ bis 1 × 10⁻³ S/cm. Das gesinterte reine oder substituierte Lithium-Titanphosphat-Material kann somit vorteilhaft direkt als Festelektrolyt in einer Lithium-Batterie eingesetzt werden.

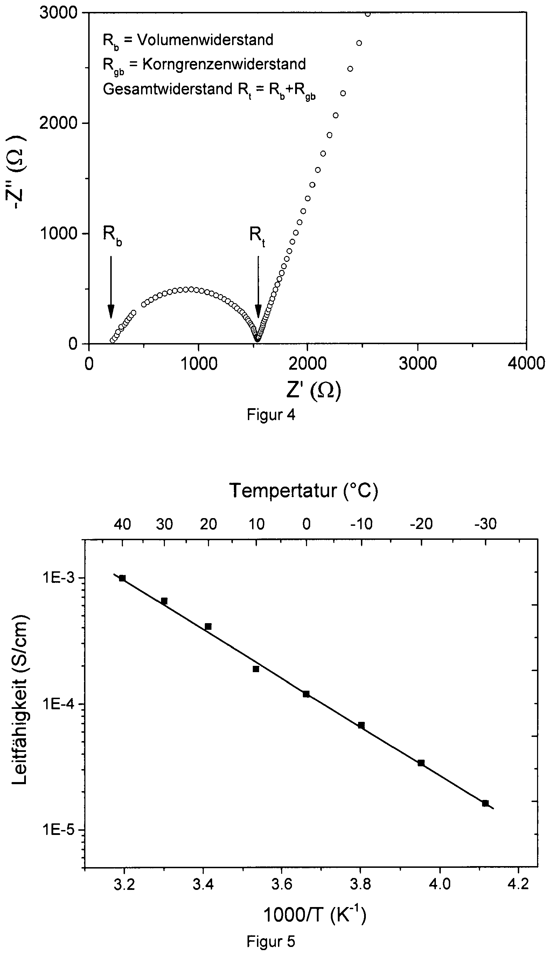

Die lonenleitfähigkeit wurde durch elektrochemische Impedanzspektroskopie der entsprechenden Pellets ermittelt. Die Ergebnisse sind in Figur 4 dargestellt.

Neben dem vorgenannten Verdichtungsschritt können dichte auf LTP-basierte Bauteile aus dem vorgesinterten Pulver aber auch direkt mittels Foliengießen hergestellt oder dichte LTP-basierte-Schichten mittels Siebdruck auf anderen Substraten aufgebracht werden.

Zusammenfassend ist zu sagen, dass die vorliegende Erfindung ein phasenreines und leicht zu sinterndes Material auf Basis von Lithium-Titanphosphaten bereitstellt, welches die Zusammensetzung Li_{1+x+y}MₓTi₂₋ₓ(PO₄)_{3-y}(SiO₄)_{y} mit M = Al, Ga, In, Sc, V, Cr, Mn, Co, Fe, Y, La-Lu mit 0 < ≤ x ≤ 0,5 und 0 ≤ y ≤ 0,5 aufweist, und in verdichteter Form eine sehr gute Lithiumionenleitfähigkeit im Bereich von 1 × 10⁻⁴ bis 1 × 10⁻³ S/cm bei Raumtemperatur zeigt. Die Erfindung offenbart dazu ein einfaches und kostengünstiges Herstellungsverfahren für diese reinen oder auch substituierten Lithium-Titanphosphat-Materialien, die bevorzugt als Festelektrolyten eingesetzt werden können

### Spezieller Beschreibungsteil

Nachfolgend wird die Erfindung anhand von einigen Figuren und ausgewählten Ausführungsbeispielen näher erläutert, ohne sich darauf einzuschränken.

Bevorzugte Zusammensetzungen für das erfindungsgemäß hergestellte Material umfassend Li_{1+x+y}MₓTi₂₋ₓ(PO₄)_{3-y}(SiO₄)_{y} mit M = Al, Ga, In, Sc, V, Cr, Mn, Co, Fe, Y, La - Lu mit 0 ≤ x ≤ 0,5 und 0 ≤ y ≤ 0,5 schließen ein, sind jedoch nicht begrenzt auf: Li_{1,5}Al_{0,5}Ti_{1,5}(PO₄)₃, Li_{1,4}Y_{0,4}Ti_{1,6}(PO₄)₃, Li_{1,3}La_{0,3}Ti_{1,7}(PO₄)₃, Li₂Sc_{0,5}Ti_{1,5}(PO₄)_{2,5}(SiO₄)_{0,5} oder auch Li_{1,8}Al_{0,4} Ti_{1,6}(PO₄)_{2.6}(SiO₄)_{0,4}.

Es wird angenommen, dass ein Fachmann auf dem Gebiet auch andere Verbindungen mit der allgemeinen Formel LiM₂(PO₄)₃ und einer geordneten NASICON-Struktur innerhalb des Umfangs der Erfindung als mit eingeschlossen ansieht.

Es zeigen:

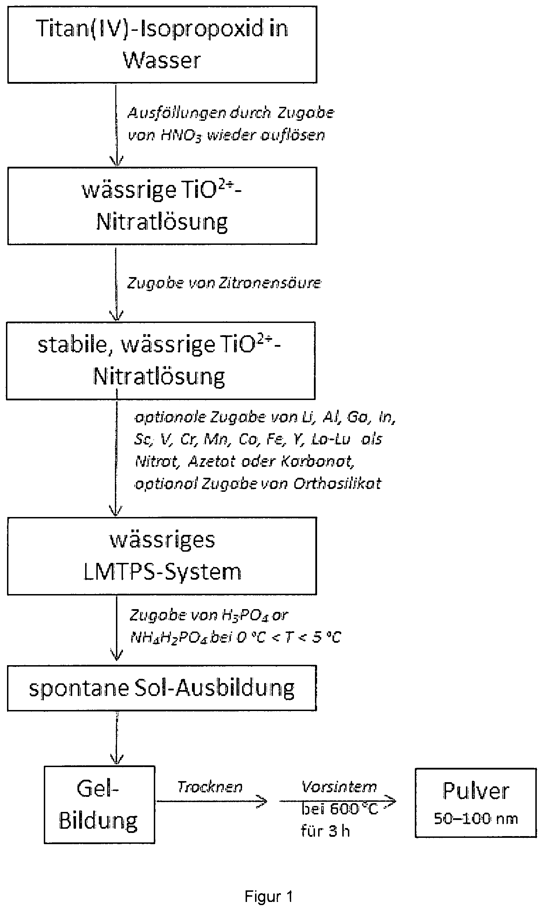

- Figur 1:: Schema des erfindungsgemäßen Herstellungsverfahrens für LMTPS-Pulver, welches in Analogie auch für die reinen LPT-Pulver eingesetzt werden kann.
- Figur 2:: Partikelgrößenverteilung des bei 600 °C vorgesinterten Li_{1.5}Al_{0.5}Ti_{1.5}(PO₄)₃-Pulvers nach einem Mahlschritt in einer Kugelmühle, wie im Text beschrieben.
- Figur 3:: Röntgendiffraktogramm des erfindungsgemäß hergestellten Li_{1,5}Al_{0,5}Ti_{1,5}(PO₄)₃-Pulvers nach dem Verdichtungsschritt.
- Figur 4:: Impedanzspektrum für die Messung bei 20 °C des erfindungsgemäß hergestellten gesinterten Li_{1,5}Al_{0,5}Ti_{1,5}(PO₄)₃-Presskörpers.
- Figur 5:: Temperaturabhängigkeit der ionischen Leitfähigkeit des erfindungsgemäß hergestellten gesinterten Li_{1,5}Al_{0,5}Ti_{1,5}(PO₄)₃-Presskörpers (Pellet).

Der Maßstab der nachfolgend aufgeführten Herstellung hängt stark von dem eingesetzten Maschinenpark für den Trocknungs- und Sinterschritt ab. Im Labormaßstab, wo üblicherweise Laboröfen und Sinteröfen bereit stehen, sind in der Regel Herstellungsmengen von einigen kg möglich. Großtechnisch können aber auf diese Weise LMTPS-Pulver auch leicht im Tonnenmaßstab erzeugt werden.

### Ausführungsbeispiel 1: Herstellung von 1 kg Li_{1,5}Al_{0,5}Ti_{1,5}(PO₄)₃ -Pulver

Die eingesetzten Chemikalien hatten einen Reinheitsgrad von mindestens 99 %. Zur Herstellung von Li_{1,5}Al_{0,5}Ti_{1,5}(PO₄)₃-Pulver wurden zunächst 1120 g Titan-Isopropoxid [Ti(IV)(OCH₂(CH₃)₂)₄] langsam und unter Rühren in ein Becherglas mit 7 Liter deionisiertem Wasser gegeben. Augenblicklich bildeten sich Titanhydroxid-Oxid-Ausfällungen. Die Ausfällungen wurden sorgfältig gefiltert und gewaschen. Der gewaschene Niederschlag wurde in ein leeres Becherglas überführt und mit 3 Liter deionisiertem Wasser aufgefüllt. Das Becherglas mit der wässrigen Lösung der Ausfällungen wurde in einem Eisbad, umfassend eine Eis-Wassermischung und ggfs. Kochsalz, unter ständigem Rühren auf Temperaturen unterhalb von 5 °C herunter gekühlt.

In einem weiteren Becherglas wurden 670 ml Salpertersäure (65 Gew.-%-ig) ebenfalls auf Temperaturen unterhalb von 5 °C heruntergekühlt. Die Kühlung erfolgte mit Hilfe eines Kühlschranks. Die gekühlte Salpetersäure wurde langsam der immer noch gekühlten Lösung mit den Titanhydroxid-Oxid-Ausfällungen zugegeben. Die bei dieser Reaktion regelmäßig entstehende Wärme wurde über das Eisbad abgeführt. Die Geschwindigkeit, mit der die Salpetersäure zugegeben wurde, wurde derart bemessen, dass die Temperatur der Lösung mit den Titanhydroxid-Oxid-Ausfällungen 10 °C nicht überstieg. Das so erhaltene wässrige System wurde in einem Kühlschrank bei 0 °C für 3 Tage aufbewahrt. Dabei bildete sich die wässrige TiO²⁺-Nitratlösung. Durch Zugabe von 1720 g Zitronensäure-Monohydrat konnte die Lösung stabilisiert werden.

271,7 g Lithiumnitrat (LiNO₃) und 492,7 g Aluminiumnitrat (Al(NO₃)₃·9 H₂O) wurden abgewogen und unter Rühren in die titanhaltige Lösung überführt. Die sich daraus ergebende Lösung wurde erneut in einem Eisbad auf Temperaturen unterhalb von 5 °C gekühlt. Dazu wurden dann unter Rühren 906,6 g Ammoniumdihydrogenphosphat (NH₄H₂PO₄) gegeben, wobei sich spontan ein Sol ausbildete. Das Rühren wurde noch für 30 Minuten fortgesetzt. Im Anschluss daran wurde das Sol langsam auf Raumtemperatur erwärmt. Nach ca. 1 Stunde war die kontinuierliche Umwandlung in ein Gel abgeschlossen.

Das so erhaltene Gel wurde zunächst für 12 Stunden bei 60 °C vorgetrocknet und anschließend für nochmals 24 Stunden bei 120 °C getrocknet. Das getrocknete Gel wurde für 3 Stunden bei 600 °C vorgesintert. Dabei erhielt man ein grau-weißes Pulver. Das Pulver wurde in einer Kugelmühle mit keramischen Kugeln für 48 Stunden gemahlen.

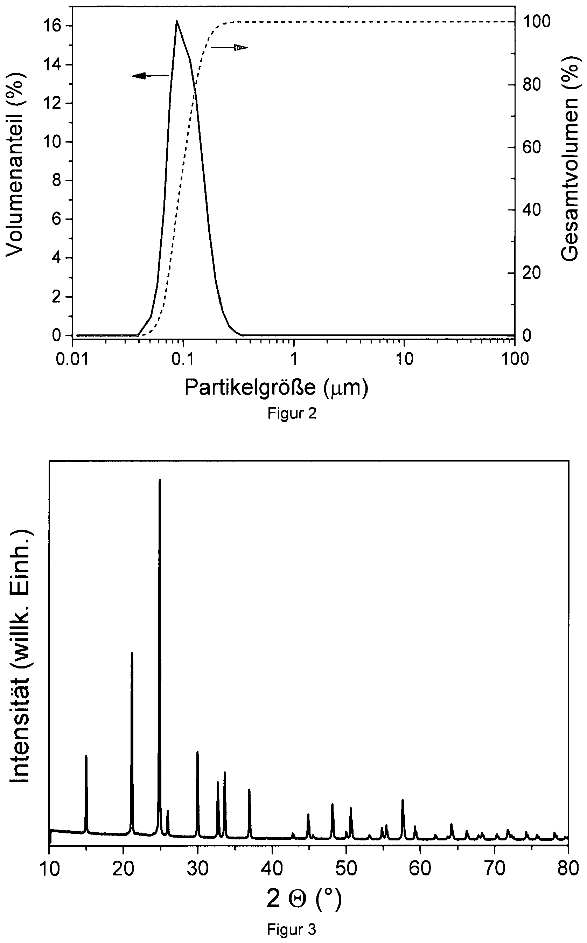

In der Figur 2 ist die Partikelgrößenverteilung dieses gemahlenen Pulvers dargestellt. Das Pulver weist eine nahezu perfekte Partikelgrößenverteilung mit d₉₀ < 0,15 µm, d₅₀ < 0,097 µm und d₁₀ < 0,066 µm auf.

### Ausführungsbeispiel 2: Herstellung von dichten Pellets aus Li_{1,5}Al_{0,5}Ti_{1,5}(PO₄)₃

1 g des vorgesinterten Pulvers aus dem Ausführungsbeispiel 1 wurde in eine zylindrische Presshülse mit einem Durchmesser von 13 mm gegeben und unter uniaxialem Pressdruck von 100 MPa bei Raumtemperatur verpresst. Die so hergestellten Pellets wurden für 5 Stunden bei 880 °C gesintert. Der Druck bezieht sich nur auf das Pressen des Pulvers für die Formgebung, während des Sinterns wurde kein Druck aufgebracht.

Nach der Sinterung erhielt man reinweiße Pellets, die eine Dichte von mehr als 99 % der theoretischen Dichte aufwiesen. Das Diffraktogramm dieser Pellets, welches mit einem Siemens D4 Röntgen-Diffraktometer unter Verwendung der Cu K_{α}-Wellenlänge aufgezeichnet wurde, zeigt keine Fremdphasen innerhalb der gesinterten Proben an, wie aus der Figur 3 ersichtlich.

### Ausführungsbeispiel 3: Leitfähigkeitsmessungen an den Pellets aus Li_{1,5}Al_{0,5}Ti_{1,5}(PO₄)₃

Die dichten Pellets aus Li_{1,5}Al_{0,5}Ti_{1,5}(PO₄)₃ gemäß dem Ausführungsbeispiel 2 wurden auf beiden Seiten mit Gold bedampft. Die dielektrischen Eigenschaften der Pellets wurden bei Temperaturen zwischen -30 °C und +40 °C mit einem kommerziellen Frequenzganganalysator aufgenommen (Biologic VMP-300) mit einem AC-Frequenzbereich von 1 MHz bis 1 Hz. Das entsprechende Impedanzspektrum für die Messung bei 20 °C ist in Figur 4 dargestellt.

Für diese dichten Pellets aus Li_{1,5}Al_{0,5}Ti_{1,5}(PO₄)₃, die gemäß Ausführungsbeispiel 2 erzeugt wurden, ergab sich eine Gesamtleitfähigkeit von 4 × 10⁻⁴ S/cm bei 20 °C. Siehe dazu auch Figur 5.

### Ausführungsbeispiel 4: Herstellung von 20 g Li₂Sc_{0,5}Ti_{1,5}(PO₄)_{2,5}(SiO₄)_{0,5}-Pulver

Zur Herstellung von Li₂Sc_{0,5}Ti_{1,5}(PO₄)_{2,5}(SiO₄)_{0,5}-Pulver wurden 21,77 g Titan-Isopropoxid langsam und unter Rühren in ein Becherglas mit 100 ml deionisiertem Wasser gegeben. Augenblicklich bildeten sich Titanhydroxid-Oxid-Ausfällungen. Die Ausfällungen wurden sorgfältig gefiltert und gewaschen. Die gewaschenen Ausfällungen wurden in ein neues leeres Becherglas überführt und mit 60 ml deionisiertem Wasser aufgefüllt. Das Becherglas mit der wässrigen Lösung der Ausfällungen wurde in einem Eisbad, umfassend eine Eis-Wassermischung, unter ständigem Rühren auf Temperaturen unterhalb von 5 °C herunter gekühlt.

In einem weiteren Becherglas wurden 14 ml Salpertersäure (65 %-ig) in einem Kühlschrank ebenfalls auf Temperaturen unterhalb von 5 °C heruntergekühlt. Die gekühlte Salpetersäure wurde langsam der immer noch gekühlten Lösung mit den Titanhydroxid-Oxid-Ausfällungen zugegeben. Die bei dieser Reaktion regelmäßig entstehende Wärme wurde über das Eisbad abgeführt. Die Geschwindigkeit, mit der die Salpetersäure zugegeben wurde, wurde derart bemessen, dass die Temperatur der Lösung mit den Titanhydroxid-Oxidausfällungen 10 °C nicht überstieg. Das so erhaltene wässrige System wurde in einem Kühlschrank bei 0 °C für 3 Tage aufbewahrt. Dabei bildete sich die wässrige TiO²⁺-Nitratlösung. Durch Zugabe von 35 g Zitronensäure-Monohydrat wurde die Lösung stabilisiert.

1,685 g Sc₂O₃ wurden abgewogen und in 20 ml 5M Salpetersäure gelöst. Diese Lösung wurde unter Rühren zusammen mit 7,043 g LiNO₃ in die titanhaltige Lösung überführt.

5,320 g Tetraethyl-orthosilikat wurde mit 25 ml 5M Salpetersäure vermischt und das sich daraus ergebene Sol wurde mit der vorgenannten titanhaltigen Lösung mit den Sc- und Li-Ionen vermischt. Das Sol wurde im Eisbad auf Temperaturen unterhalb von 5 °C gekühlt.

Dazu wurden dann unter Rühren 14,69 g NH₄H₂PO₄ gegeben. Das Rühren wurde noch für 30 Minuten fortgesetzt. Im Anschluss daran wurde das Sol langsam auf Raumtemperatur erwärmt. Nach ca. 30 Minuten war die kontinuierliche Umwandlung in ein Gel abgeschlossen.

Das so erhaltene Gel wurde zunächst für 12 Stunden bei 60 °C vorgetrocknet und anschließend für nochmals 24 Stundenbei 120 °C getrocknet. Das getrocknete Gel wurde für 3 Stunden bei 600 °C vorgesintert. Dabei erhielt man ein grau-weißes Pulver. Das Pulver umfassend Li₂Sc_{0,5}Ti_{1,5}(PO₄)_{2,5}(SiO₄)_{0,5} wurde in einer Kugelmühle mit keramischen Kugeln für 48 Stunden gemahlen und konnte analog zum Ausführungsbeispiel 2 zu dichten Pellets verdichtet werden.

## Patentansprüche

1. Verfahren zur Herstellung von reinen und/oder substituierten Lithium-Titanphosphaten mit der allgemeinen Zusammensetzung Li_{1+x+y}MₓTi₂₋ₓ(PO₄)_{3-y}(SiO₄)_{y},
mit M = Al, Ga, In, Sc, V, Cr, Mn, Co, Fe, Y, La - Lu und 0 ≤ x ≤ 0,5 und 0 ≤ y ≤ 0,5, wobei die Herstellung über ein Sol-Gel-Verfahren erfolgt,
bei dem aus Ausgangsstoffen zunächst ein Sol erzeugt wird, dieses in ein Gel uberführt wird, und durch Trocknung des Gels und durch Vorsinterung ein entsprechendes Pulver, umfassend das reine oder substituierte Lithium-Titanphosphat erhalten wird, ***dadurch gekennzeichnet,***
**dass** in einem Teilschritt des Herstellungsverfahrens
- Titan(IV)-isopropoxid in Wasser gegeben wird, wobei sich Ausfällungen von Titanhydroxid-Oxid bilden,
- das System auf Temperaturen unterhalb von 10 °C abgekühlt wird und
- die Ausfällungen durch Zugabe von Salpetersäure wieder aufgelöst werden, wobei sich eine wässrige TiO²⁺-Nitratlösung ausbildet,
- der wässrigen TiO²⁺-Nitratlösung anschließend eine Polycarbonsäure zugegeben wird, wodurch sich auch bei Raumtemperatur einen stabile wässrige TiO²⁺-Nitratlösung ausbildet, und
- der stabilen wässrigen TiO²⁺-Nitratlösung anschließend Phosphationen zur Ausbildung des Gels zugegeben werden.

2. Verfahren nach Anspruch 1,
bei dem der wässrigen TiO²⁺-Nitratlösung Zitronensäure, Fumarsäure oder Weinsäure zugegeben wird.

3. Verfahren nach einem der Ansprüche 1 bis 2, bei dem
- eine wässrige Lösung von Lithium- und je nach Substitution M-Salzen mit M = Al, Ga, In, Sc, V, Cr, Mn, Co, Fe, Y, La - Lu bereitgestellt wird,
- entsprechend der gewünschten Stöchiometrie eine wässrige Lösung von Li- und M-Salzen mit der wässrigen TiO²⁺-Nitratlösung vermischt werden,
- diese wässrige Mischung auf Temperaturen unterhalb von 10 °C abgekühlt wird, bevor ihr ein Phosphatsalz zugegeben wird, wodurch sich das Sol ausbildet.

4. Verfahren nach einem der Ansprüche 1 bis 3,
bei dem Lithium in Form von Lithiumnitrat, Lithiumazetat, Lithiumkarbonat oder Lithiumhydroxid eingesetzt wird.

5. Verfahren nach einem der Ansprüche 1 bis 4,
bei dem die M-Salze in Form von Nitraten, Azetaten, Karbonaten, oder Hydroxiden eingesetzt werden.

6. Verfahren nach einem der Ansprüche 1 bis 5,
bei dem als Phosphatsalz Phosphorsäure und/oder NH₄H₂PO₄ zugegeben wird.

7. Verfahren nach einem der Ansprüche 1 bis 6,
bei dem dem wässrigen System vor der Zugabe des Phosphatsalzes ein lösliches Silikat, eine ortho-Silikatsäure oder ein Alkylester der ortho-Silikatsäure zugegeben wird.

8. Verfahren nach einem der Ansprüche 1 bis 7,
bei dem die Umwandlung des Sols in ein Gel kontinuierlich durch Erwärmung des Sols auf Raumtemperatur erfolgt.

9. Verfahren nach einem der Ansprüche 1 bis 8,
bei dem das reine und/oder substituierte Lithium-Titanphosphat bei Raumtemperatur bei Drücken zwischen 50 und 200 MPa verdichtet und anschließend drucklos bei Temperaturen zwischen 820 und 1050 °C gesintert wird.

## Claims

1. Method for producing pure and/or substituted lithium titanium phosphates with the general composition Li_{1+x+y}MₓTi₂₋ₓ(PO₄)_{3-y}(SiO₄)_{y},
with M = Al, Ga, In, Sc, V, Cr, Mn, Co, Fe, Y, La - Lu and 0 ≤ x ≤ 0.5 and 0 ≤ y ≤ 0.5,
in which production is by a sol-gel process,
in which first a sol is produced from the initial materials, this is converted into a gel and a corresponding powder, comprising pure or substituted lithium titanium phosphate, is obtained by drying the gel and pre-sintering,
***characterised in that***
in a part step of the production process
- titanium(IV) isopropoxide is added to water, in which precipitations of titanium hydroxide oxide form,
- the system is cooled to temperatures below 10° C and
- the precipitations are dissolved again by adding nitric acid, in which an aqueous TiO²⁺ nitrate solution forms,
- polycarboxylic acid is then added to the aqueous TiO²⁺ nitrate solution, through which a stable aqueous TiO²⁺ nitrate solution also forms at room temperature, and
- phosphate ions are then added to the stable aqueous TiO²⁺ nitrate solution to form the gel.

2. Method according to claim 1,
in which citric acid, fumaric acid or tartaric acid is added to the aqueous TiO²⁺ nitrate solution.

3. Method according to one of claims 1 to 2, in which
- an aqueous solution of lithium and M-salts according to substitution with M = Al, Ga, In, Sc, V, Cr, Mn, Co, Fe, Y, La - Lu is prepared,
- an aqueous solution of Li and M-salts is mixed with the aqueous TiO²⁺ nitrate solution according to the desired stoichiometry,
- this aqueous mixture is cooled to temperatures below 10° C, before a phosphate salt is added to it, through which the sol forms.

4. Method according to one of claims 1 to 3,
in which lithium is used in the form of lithium nitrate, lithium acetate, lithium carbonate or lithium hydroxide.

5. Method according to one of claims 1 to 4,
in which the M-salts are used in the form of nitrates, acetates, carbonates, or hydroxides.

6. Method according to one of claims 1 to 5,
in which phosphoric acid and/or NH₄H₂PO₄ is added as a phosphate salt.

7. Method according to one of claims 1 to 6,
in which a soluble silicate, an orthosilicic acid or an alkyl ester of the orthosilicic acid is added to the aqueous system before adding the phosphate salt.

8. Method according to one of claims 1 to 7,
in which the conversion of the sol into a gel happens continuously by warming the sol to room temperature.

9. Method according to one of claims 1 to 8,
in which the pure and/or substituted lithium titanium phosphate is compressed at pressures between 50 and 200 MPa at room temperature and then sintered without pressure at temperatures between 820 and 1050° C.

## Revendications

1. Procédé de production de phosphates de lithium et de titane purs et/ou substitués de composition générale Li_{1+x-y}MₓTᵢ₂-ₓ(PO₄)_{3-y}(SiO₄)_{y}, avec M = Al, Ga, In, Sc, V, Cr, Mn, Co, Fe, Y, La - Lu et 0 ≤ x ≤ 0,5 et 0 ≤ y ≤ 0,5, la production s'effectuant par un procédé sol-gel,
dans lequel on produit d'abord un sol à partir de substances de départ, on le transforme en un gel, et par séchage du gel et par pré-frittage, on obtient une poudre correspondante comprenant le phosphate de lithium et de titane pur ou substitué,
**caractérisé**
**en ce que**, dans un stade partiel du procédé de production
- on met de l'isopropylate de titane (IV) dans de l'eau, en formant des précipités d'oxyde-hydroxyde de titane,
- on refroidit le système à des températures en dessous de 10°C et
- on redissout les précipités par addition d'acide nitrique, en formant une solution aqueuse de nitrate de TiO²⁺,
- on ajoute ensuite un acide polycarboxylique à la solution aqueuse de nitrate de TiO²⁺, en formant ainsi une solution aqueuse de nitrate de TiO²⁺ stable même à la température ambiante, et
- on ajoute ensuite à la solution aqueuse stable de nitrate de TiO²⁺ des ions phosphates pour constituer le gel.

2. Procédé suivant la revendication 1,
dans lequel on ajoute de l'acide citrique, de l'acide fumarique ou de l'acide tartrique à la solution aqueuse de nitrate de TiO²⁺.

3. Procédé suivant l'une des revendications 1 à 2, dans lequel
- on se procure une solution aqueuse de sels de lithium et suivant la substitution de sels de M avec M = Al, Ga, In, Sc, V, Cr, Mn, Co, Fe, Y, La - Lu,
- on mélange, conformément à la stœchiométrie souhaitée, une solution aqueuse de sels de Li et de sels de M à la solution aqueuse de nitrate de TiO²⁺,
- on refroidit ce mélange aqueux à des températures en dessous de 10°C avant de lui ajouter un sel de phosphate en formant ainsi le sol.

4. Procédé suivant l'une des revendications 1 à 3,
dans lequel on utilise du lithium sous la forme de nitrate de lithium, d'acétate de lithium, de carbonate de lithium ou d'hydroxyde de lithium.

5. Procédé suivant l'une des revendications 1 à 4,
dans lequel on utilise les sels de M sous la forme de nitrates, d'acétates, de carbonates ou d'hydroxydes.

6. Procédé suivant l'une des revendications 1 à 5,
dans lequel on ajoute, comme sel de phosphate, de l'acide phosphorique et/ou du NH₄H₂PO₄.

7. Procédé suivant l'une des revendications 1 à 6,
dans lequel on ajoute au système aqueux, avant l'addition du sel de phosphate, un silicate soluble, un ortho-silicate acide ou un ester alcoylique de l'ortho-silicate acide.

8. Procédé suivant l'une des revendications 1 à 7,
dans lequel on effectue la transformation du sol en un gel en continu, en chauffant le sel à la température ambiante.

9. Procédé suivant l'une des revendications 1 à 8,
dans lequel on comprime le phosphate de lithium et de titane pur et/ou substitué à la température ambiante à des pressions comprises entre 50 et 200 MPa et ensuite on le fritte sans pression à des températures comprises entre 820 et 1050°C.
